# EUROPEAN PATENT SPECIFICATION

(11) **EP 3 944 069 B1**
(45) Date of publication and mention of the grant of the patent: **20.03.2024**
(21) Application number: 21203944.0
(22) Date of filing: 21.10.2021
(51) Int. Cl.: G06F 3/16, G06F 3/0482, G06F 3/04847, G06F 9/451

(54) **METHOD, APPARATUS AND SYSTEM OF VOICE INTERACTION, VEHICLES AND STORAGE MEDIA**
VERFAHREN, VORRICHTUNG UND SYSTEM ZUR SPRACHINTERAKTION, FAHRZEUGE UND SPEICHERMEDIEN
PROCÉDÉ, APPAREIL ET SYSTÈME D'INTERACTION VOCALE, VÉHICULES ET SUPPORT D'ENREGISTREMENT

(30) Priority: 09.07.2021 CN 202110774973
(43) Date of publication of application: 26.01.2022
(73) Proprietor: GUANGZHOU XIAOPENG MOTORS TECHNOLOGY CO., LTD., Guangzhou (CN)
(72) Inventor: BAO, Pengli, Guangzhou (CN); SHI, Xiaokai, Guangzhou (CN); HE, Hongjing, Guangzhou (CN); LIN, Bochuan, Guangzhou (CN); MA, Hongbo, Guangzhou (CN)
(74) Representative: Treeby, Philip David William

(56) References cited:
- CN-A- 111 722 826
- CN-A- 111 768 780
- US-A1- 2008 162 138
- US-A1- 2012 215 543
- US-A1- 2018 039 477

## Description

### Field of Invention

The present application relates to transportation field, and in particular, to a method, apparatus and system for voice interaction, vehicles and computer-readable storage media.

### Background

With the development of intelligence in vehicles, users are more frequently interacting with applications on the vehicles. Compared with interaction where a user manually operates a graphical user interface (GUI), voice interaction improves driving safety. Current voice interaction approaches are generally implemented based on use of voice labeling on GUI pages, which have rather high associated labor costs. Moreover, once a control of a page changes, manual labeling is required multiple times, resulting in high maintenance costs.

CN 111722826 A discloses a construction method of voice interaction information. CN 111768780 A discloses a voice control method of a vehicle. US 2018/039477 A1 discusses computerized methods, systems, and devices for integrating voice-based interaction and control into a native GUI of an executed application. US 2008/162138 A1 discusses enhanced application of spoken input, in which a single, natural language voice command is accessed.

### Summary of Invention

As such, implementations of the present application provide a method, apparatus and system for voice interaction, vehicles and computer-readable storage media.

In accordance with the present invention, there are provided: a method for voice interaction as recited by claim 1, an apparatus for voice interaction as recited by claim 9, a system for voice interaction comprising a vehicle and server as recited by claim 10, and a non-transitory computer-readable medium as recited by claim 11. Preferred features are set out in the dependent claims.

In the present invention, a UI control library for an application is created in advance. When a graphical user interface of the application is displayed, a list of controls on the graphical user interface is acquired. Voice interaction properties of the controls are acquired from the UI control library according to a predetermined policy, and scene element information corresponding to the controls is generated from the voice interaction properties. A voice interaction scene is built based on the scene element information. A scene event is received of voice interaction, the scene event generated from a voice request and the voice interaction scene. With the invention, the graphical user interface can be automatically transformed into a voice interaction scene, which achieves building automation of the voice interaction scene and thus enables voice interaction between vehicles and users. Compared to conventional voice labeling approaches that require considerable labor costs, the present invention enables service of an application to automatically obtain voice interaction properties, generate scene element information, and form a voice interaction scene. Therefore, the labor costs are saved to some extent, and the potential for human errors is reduced. Moreover, in case of a change in the application, a new voice interaction scene can be automatically generated simply by changing the settings of the properties, effectively reducing maintenance costs.

Additional aspects and advantages of embodiments of the present application will be set forth in the description below, and will become apparent from the description, or can be understood by practice of the present application.

### Brief Description of Drawings

The above and/or additional aspects and advantages of the present invention will become apparent and readily understood from the following description of the embodiments with reference to the following drawings, in which:
FIG. 1 is a flow chart of a method of voice interaction according to the present application;
FIG. 2 is a block diagram of an apparatus for voice interaction according to the present application;
FIG. 3 shows an example for a method for voice interaction according to the present application;
FIG. 4 is a flow chart of a method of voice interaction according to the present application;
FIG. 5 is a block diagram of an apparatus for voice interaction according to the present application;
FIG. 6 is a flow chart of a method of voice interaction according to the present application;
FIG. 7 is a flow chart of a method of voice interaction according to the present application;
FIG. 8 is a flow chart of a method of voice interaction according to the present application;
FIG. 9 is a flow chart of a method of voice interaction according to the present application;
FIG. 10 is a flow chart of a method of voice interaction according to the present application;
FIG. 11 is a flow chart of a method of voice interaction according to the present application;
FIG. 12 is a flow chart of a method of voice interaction according to the present application.

### Detailed Description

The embodiments of the present application will now be described in detail, examples of which are illustrated in the accompanying drawings. Same or similar reference numerals indicate same or similar elements or elements having same or similar functions throughout. The embodiments described below by reference to the drawings are exemplary and are intended to be illustrative of embodiments of the present application and are not to be construed as limiting the present invention.

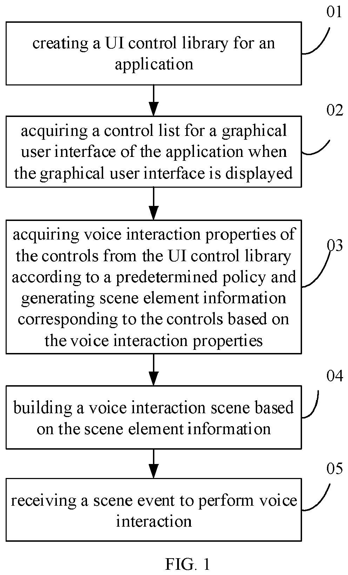

Referring to FIG. 1, a method of voice interaction is provided, which includes:
step 01, creating a UI control library for an application in advance;
step 02, acquiring a control list for a graphical user interface of the application when the graphical user interface is displayed, the control list comprising a plurality of controls;
step 03, acquiring voice interaction properties of the controls from the UI control library according to a predetermined policy and generating scene element information corresponding to the controls based on the voice interaction properties, wherein the voice interaction properties are generated through the UI control library based on properties of the controls;
step 04, building a voice interaction scene based on the scene element information; and
step 05, receiving a scene event to perform voice interaction, the scene event generated based on a voice request and the voice interaction scene.

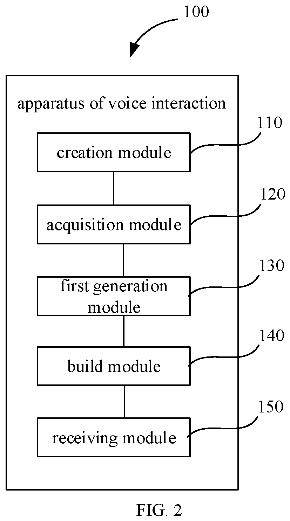

Accordingly, referring to FIG. 2, in accordance with the present application, an apparatus for voice interaction 100 is further provided. The method of voice interaction in accordance with the embodiments of the present application can be implemented by the apparatus for voice interaction 100. The apparatus for voice interaction 100 includes a creation module 110, an acquisition module 120, a first generation module 130, a building module 140, and a receiving module 150. The step 01 can be performed by the creation module 110, the step 02 can be performed by the acquisition module 120, the step 03 can be performed by the first generation module 130, the step 04 can be performed by the building module 140, and the step 05 can be performed by the receiving module 150. In other words, the creation module 110 is configured to create a UI control library for an application in advance. The acquisition module 120 is configured to acquire a control list of controls on a graphical user interface of the application when the graphical user interface is displayed. The first generation module 130 is configured to acquire voice interaction properties of the controls from the UI control library according to a predetermined policy and generate scene element information corresponding to the controls based on the voice interaction properties. The building module 140 is configured to build a voice interaction scene based on the scene element information. The receiving module 150 is configured to receive a scene event to perform voice interaction, the scene event generated based on a voice request and the voice interaction scene.

In accordance with the present application, a vehicle is further provided. The vehicle comprises memory and a processor. The memory has stored thereon a computer program. The processor is provided to execute the computer program to: create a UI control library for an application in advance; when a graphical user interface of the application is displayed, acquire a control list of controls on the graphical user interface; acquire voice interaction properties of the controls from the UI control library according to a predetermined policy, and generate scene element information corresponding to the controls based on the voice interaction properties; build a voice interaction scene based on the scene element information; and receive a scene event to perform voice interaction, the scene event generated from a voice request and the voice interaction scene.

In particular, the vehicle has a screen for displaying a graphical user interface and an automatic speech recognition device supporting voice interaction. The vehicle may be a land vehicle, a flying car, a high-speed train, and the like. Taking a land vehicle as an example, the vehicle includes a display area(s) and a processor. The display areas of the vehicle may include, among others, an instrument screen, an in-vehicle display, and a head up display that can be implemented on the windshield of the vehicle. An in-vehicle system on the vehicle presents content to users through a Graphical User Interface (GUI). The display area includes a number of UI elements, and different display areas may present same or different UI elements. The UI elements may include card objects, application icons or interfaces, folder icons, multimedia file icons, controls operable for interaction, and the like.

The present invention is described in detail with reference to a land vehicle, as an example, as follows.

Specifically, at step 01, a UI control library for an application is created in advance. The UI control library is an Android UI component library encapsulated depending on actual applications. The UI control library may include a public UI control library, and may also include a dedicated UI control library that is generated from the public UI control library for an actual application.

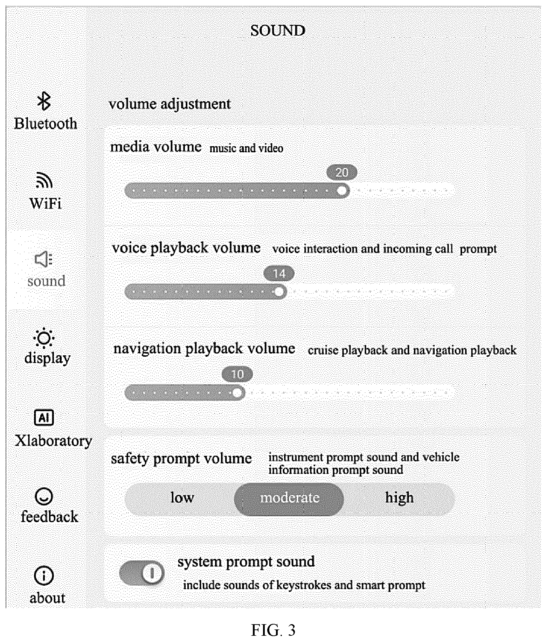

At step 02, a control list for a graphical user interface of the application is acquired when the graphical user interface is displayed, wherein the control list comprises a plurality of controls. It should be appreciated that each GUI in the application has a control list including a plurality of controls. The UI controls and properties of the views of the UI controls can be called from the UI control library. The expression of "upon display of the graphical user interface" means a time when the graphical user interface is displayed on the screen caused by certain operations of a user. Reference is made to FIG. 3, which shows a GUI for "SOUND".

In particular, when entering the graphical user interface, a corresponding trigger request can be generated indicating an event of currently entering a certain graphical user interface is determined. The trigger request may also include a determination, by means of an event or event tracking, as to whether a certain graphical user interface has been entered. For example, a user in the vehicle manually clicks "navigation" or uses voice interaction with a voice of "activate navigation" to cause the homepage of the navigation APP to be displayed on the screen. The homepage of the navigation APP is the currently entered graphical user interface. Upon display of the homepage of the navigation APP, a trigger request for the graphical user interface scene is received, and a determination is made that the graphical user interface is displayed at the time.

When entering the graphical user interface, the control list in the graphical user interface is acquired. It can be appreciated that there are multiple controls in a GUI of each page. The controls are commonly known GUI controls, such as a directory control, Text, Edit, UpDown, Picture, Button, Checkbox, and other controls.

Further, at step 03, each of the controls in the control list is traversed, and voice interaction properties of the controls are acquired from the UI control library according to a predetermined policy and scene element information corresponding to the controls is generated based on the voice interaction properties. The voice interaction properties are generated from the properties of the controls in the UI control library. The voice interaction properties include properties of corresponding controls needed for Voice User Interface (VUI) functionality, and may include properties such as unique identifiers, control types, control executable actions. A corresponding voice interaction operation can be implemented by changing a voice interaction property during a voice interaction. According to the predetermined policy , the acquisition includes extraction from the properties of the controls displayed on the graphical user interface, or extraction from voice labels added in advance.

Specifically, the voice interaction properties (VUI properties) can be generated and added to the UI control library based on properties of the UI control views. That is, based on properties of different UI control views, the properties of these UI control views in the UI control library are determined as the VUI properties required by the VUI. In an example, a package VuiCommon may be created, and a voice interaction control VuiView may be defined in the package VuiCommon. An application can add a VUI property for a VuiView based on the UI control library, such as setVuiLabel (String): search.

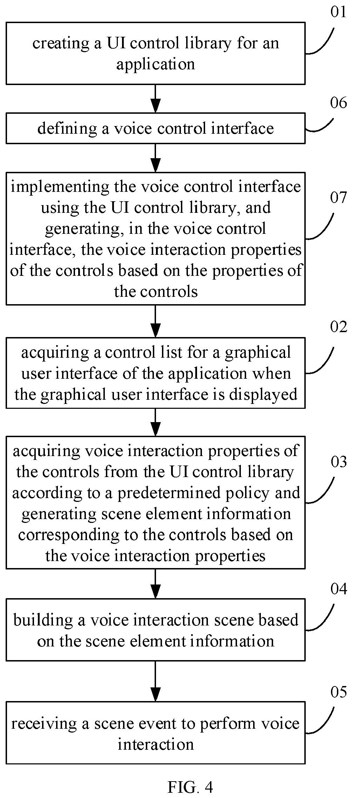

Preferably, referring to FIG. 4, the method of voice interaction further includes:
step 06, defining a voice control interface; and
step 07, implementing the voice control interface using the UI control library and generating, in the voice control interface, the voice interaction properties of the controls based on the properties of the controls.

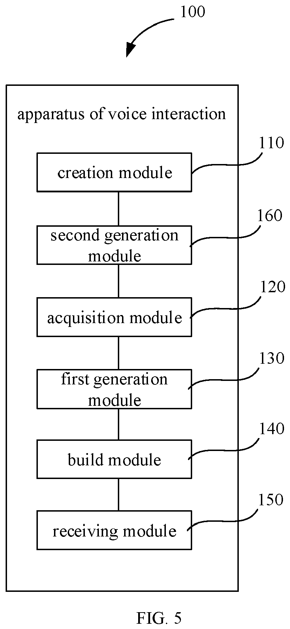

Referring to FIG. 5, the apparatus for voice interaction 100 further comprises a second generation module 160. The steps 06 and 07 can be implemented by the second generation module 160. In other words, the second generation module 160 is configured to define a voice control interface; and implement the voice control interface using the UI control library, and generate, in the voice control interface, the voice interaction properties of the controls based on the properties of the controls.

The processor is configured to define a voice control interface; and implement the voice control interface using the UI control library, and generate, in the voice control interface, the voice interaction properties of the controls based on the properties of the controls.

Specifically, a voice control interface may be defined. A control view in the UI control library then implements the voice control interface, and thus the control view has an implemented method of the voice control interface. A voice interaction property of a control is generated through a set method of the voice control interface.

The package VuiCommon is created, and the UI control library is dependent on VuiCommon. The voice control interface is defined in the package VuiCommon as IVuiView voice control interface, and set/get methods for VUI related properties are defined in IVuiView. VuiView implements the IVuiView voice control interface of VuiCommon, and a VUI property or properties are added for each VuiView by the set method or methods.

In this way, the Android original properties are extended to include the VUI properties by defining the voice control interface and having the UI control library depend on VuiCommon.

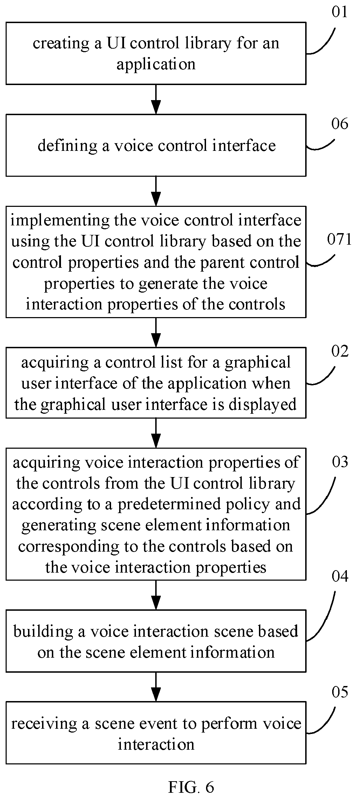

In adding a property, preferably, the property comprises a control property of the control and a parent control property of a parent control of the control; and referring to FIG. 6, the step 07 further comprises:
step 071, implementing the voice control interface using the UI control library based on the control properties and the parent control properties to generate the voice interaction properties of the controls.

The step 071 can be implemented by the second generation module 160. In other words, the second generation module 160 is configured to implement the voice control interface using the UI control library based on the control properties and the parent control properties to generate the voice interaction properties of the controls.

The processor is configured to implement the voice control interface using the UI control library based on the control properties and the parent control properties to generate the voice interaction properties of the controls.

Specifically, the properties comprise control properties of the controls and parent control properties of parent controls of the controls. A control property of a control is a property of this control. In addition, a parent control of the control may also be determined, and the parent control or father control is a control in an upper level than the current control. For example, a GUI for "SOUND" is provided with, among other, a volume control and a media volume control. The volume control is provided with an adjustment button including "high, moderate, and low" options. Thus, the adjustment button is the parent control of the "high, moderate, and low" controls, and the volume control is the parent control of the adjustment button. A preset number of levels of parent controls may be determined. The parent controls of all levels may also be determined.

When a parent control or controls are determined, the respective properties of one or more parent controls, i.e., the parent control properties are obtained accordingly. Further, generation or addition of voice interaction properties can be performed based on the control properties of the control and the parent control properties of the parent control. The generated voice interaction properties may include such as parent control identifiers and parent control labels.

In this way, with the determination of a parent control of a control, the graphical user interface is provided with a parent-child relation in a 3D space to a certain extent, such that a built voice interaction scene has three-dimensional spatial information for voice manipulation. When a voice command specifies the control, the user's desired operation can be effectively selected, thereby improving user experience.

Preferably, the voice interaction properties comprise control unique identifiers, control categories, control labels, control supported actions, parent control identifiers, and/or parent control labels. The parent control identifiers and parent control labels may be derived from the parent control properties of the parent control of the control and by the UI control library implementing the voice control interface.

Specifically, a unique identifier of a control, e.g., vuiElementId, can be obtained by extracting android:id.

A control type vuiElementType includes basic action words for generalization, e.g., Switch, the default generalization of which is switch on/switch off.

A control supported action vuiElementAction of a control includes an action supported by the control such as Click, Set Value, or the like.

A control label vuiLabel includes customizable label content. If a control contains text, the value of vuiLabel is the content of the text.

A parent control identifier vuiFatherElementId can be obtained by extracting android:id of the parent control. A parent control label vuiFatherLabel includes customizable label content. If a control contains text, the value of vuiLabel is the content of the text.

In this way, the Android original properties are extended to include the generated VUI properties of the controls by adding the VUI properties to the UI control library.

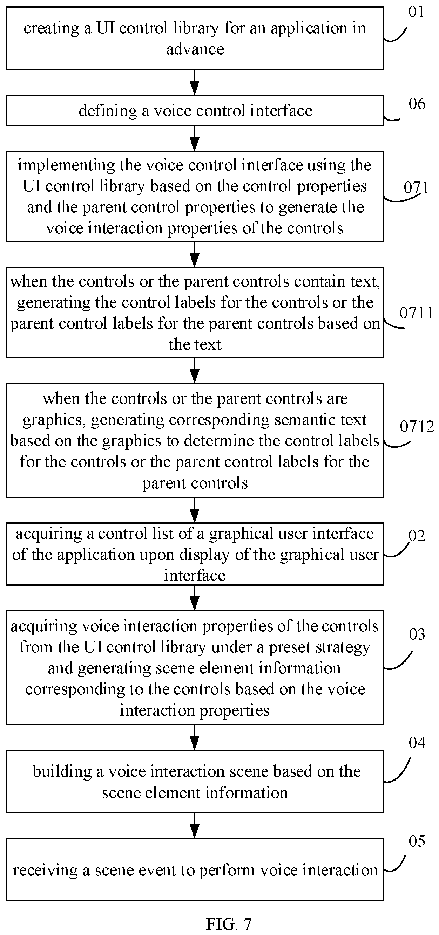

With reference to FIG. 7, the step 071 includes:
step 0711, when the controls or the parent controls contain text, generating the control labels for the controls or the parent control labels for the parent controls based on the text, and
step 0712, when the controls or the parent controls are graphics, generating corresponding semantic text based on the graphics to determine the control labels for the controls or the parent control labels for the parent controls.

The steps 0711 and 0712 can be implemented by the second generation module 160. In other words, the second generation module 160 is configured to, when the controls or the parent controls contain text, generate the control labels for the controls or the parent control labels for the parent controls based on the text; and when the controls or the parent controls are graphics, generate corresponding semantic text based on the graphics to determine the control labels for the controls or the parent control labels for the parent controls.

The processor is configured to, when the controls or the parent controls contain text, generate the control labels for the controls or the parent control labels for the parent controls based on the text; and when the controls or the parent controls are graphics, generate corresponding semantic text based on the graphics to determine the control labels for the controls or the parent control labels for the parent controls.

When the controls or the parent controls contain text, the control labels for the controls or the parent control labels for the parent controls are generated from the text.

Referring to FIG. 3 again, which shows a GUI for "SOUND". A control or parent control is a text control with the text "media volume". The control label of the control or the parent control label of the parent control can then be "media volume" extracted from the text.

When the controls or the parent controls are graphics, corresponding semantic text based on the graphics are generated to determine the control labels for the controls or the parent control labels for the parent controls.

Referring to FIG. 3 again, which shows a GUI for "SOUND". A control or parent control is a graphic control having a magnifying glass graphic and without text. The control label of the control or the parent control label of the parent control is then semantic text generated based on the graphic, such as "search". The control label or the parent control label can be "search".

Further, in the step 02, voice interaction properties of the controls are acquired according to a predetermined policy, and scene element information corresponding to the controls are generated based on the voice interaction properties. The controls have their respective scene element information, which is generated from voice interaction properties.

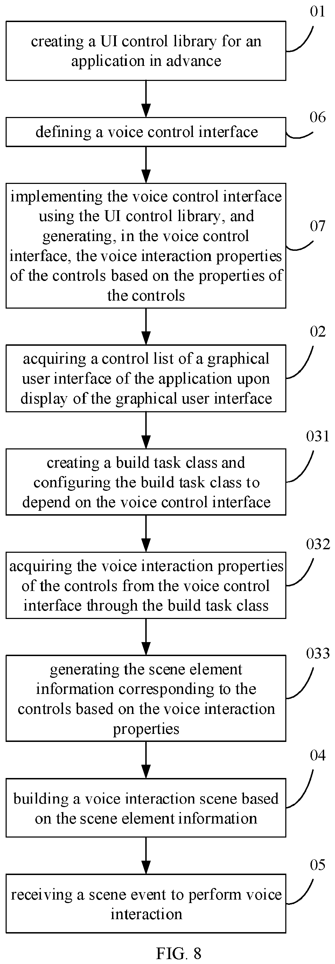

Preferably, referring to FIG. 8, the step 03 includes:
step 031, creating a build task class and configuring the build task class to depend on the voice control interface;
step 032, acquiring the voice interaction properties of the controls from the voice control interface through the build task class; and
step 033, generating the scene element information corresponding to the controls based on the voice interaction properties.

The steps 031-033 can be implemented by the first generation module 130. In other words, the first generation module 130 is configured to create a build task class and configure the build task class to depend on the voice control interface; acquire the voice interaction properties of the controls from the voice control interface through the build task class; and generate the scene element information corresponding to the controls based on the voice interaction properties.

The processor is configured to create a build task class and configure the build task class to depend on the voice control interface; acquire the voice interaction properties of the controls from the voice control interface through the build task class; and generate the scene element information corresponding to the controls based on the voice interaction properties.

Specifically, a build task class (also referred to as a task class) can be created through VuiEngine SDK. This class is configured to depend on the voice control interface e.g., by using the import operation. For example, in case of a Bluetooth switch control, this control implements the voice control interface, and a voice interaction property or properties of this control can be obtained by using a get method or methods in the Bluetooth switch control implemented this interface. Scene element information corresponding to the control is then generated based on the voice interaction properties. For example, VuiElement is generated from each voice interaction property and is added to a generated tree structure. The information of the voice interaction scene corresponding to the graphical user interface is formed at last.

In an example, VuiElement is generated for the control "details" as follows:

```
    "elements":[{
    "elements":[{"id":"2131296983_0", "label":"details", "layoutLoadable":true,
    "resourceName":"id/x_list_action_button_icon", "timestamp":1623830168531,
    "type": "ImageButton" }],
    "fatherLabel":"select a network","id":"2131296955_0","label":"the first|AI-Test",
    "layoutLoadable":true,"resourceName":"id/wifi_item_two", "timestamp": 1623830168531, "ty
    pe":"Group"}, {"actions":{ "Click":{ "actType":"Select", "bizType":"Connect"}.
```

In this way, conversion from the graphical user interface to the VUI scene element information is achieved by means of the voice control interface and the task class. Moreover, an association is established between the UI control library and the VuiEngine SDK by extending the voice control interface. This can, to some extent, avoid redundancy in application packages due to the VuiEngine SDK depending on the UI control library and reduce the coupling.

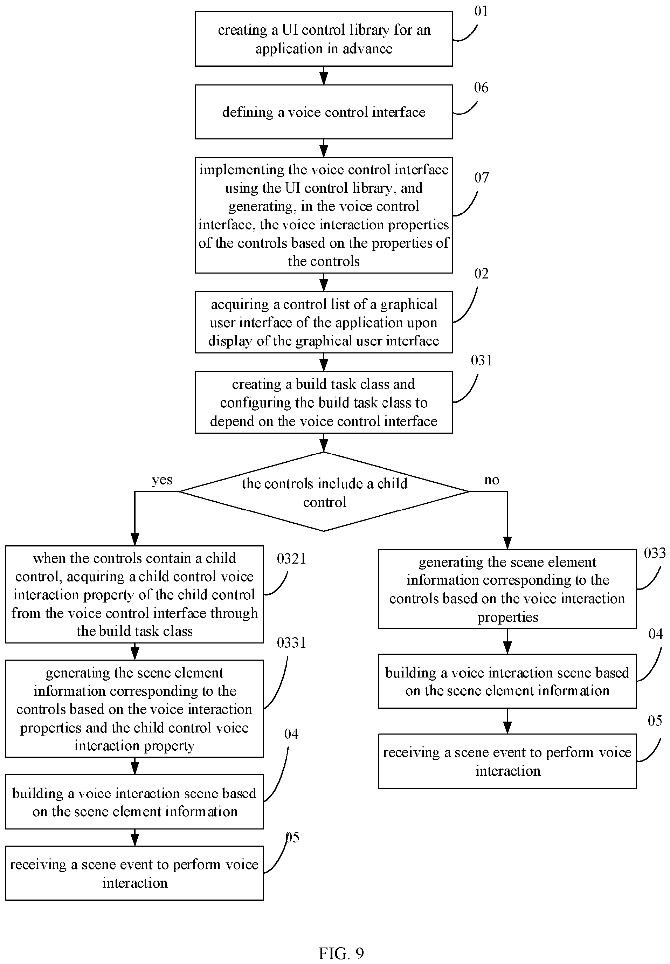

Preferably, referring to FIG. 9, the step 032 includes:
step 0321, when the controls contain a child control, acquiring a child control voice interaction property of the child control from the voice control interface through the build task class.

The step 033 includes:
step 0331, generating the scene element information corresponding to the controls based on the voice interaction properties and the child control voice interaction property.

The steps 0321 and 0331 can be implemented by the first generation module 130. In other words, the first generation module 130 is configured to, when the controls contain a child control, acquire a child control voice interaction property of the child control from the voice control interface through the build task class; and generate the scene element information corresponding to the controls based on the voice interaction properties and the child control voice interaction property.

The processor is configured to, when the controls contain a child control, acquire a child control voice interaction property of the child control from the voice control interface through the build task class; and generate the scene element information corresponding to the controls based on the voice interaction properties and the child control voice interaction property.

Specifically, there is a hierarchy of the controls. As described above, a control may have a parent control, and the control may also have a child control. For example, the GUI for "SOUND" is provided with, among other, a volume control and a media volume control. The volume control is provided with an adjustment button including "high, moderate, and low" options. Thus, the "high, moderate, and low" controls are child controls of the adjustment button control.

When a voice interaction property or properties of a control is obtained using a get method or methods, a determination is made as to whether the control or control view contains a child view, i.e., a child control. If this control view contains a child view, information of the child view is recursed to obtain voice interaction properties of the child view. The voice interaction properties of the child view are added into the voice interaction properties of the control or control view, as scene element information, i.e., a VuiElement array. If the control or control view does not contain a child view, the scene element information is generated directly from the voice interaction properties of the control view.

In this way, when generating the scene element information, the child controls of the controls are recursed. This provides the graphical user interface with a parent-child relation in a 3D space to a certain extent, such that a built voice interaction scene has three-dimensional spatial information for voice manipulation. When a voice command specifies the control, the user's desired operation can be effectively selected, thereby improving user experience.

Further, at the step 03, a voice interaction scene is generated from the scene element information. Each control or control view in the graphical user interface has its corresponding scene element information. All the controls or control views in the GUI make up the current page of the GUI. The scene element information corresponding to the control views generated by the present application constitutes a voice interaction scene, and there is a one-to-one correspondence between the scene element information and the current GUI.

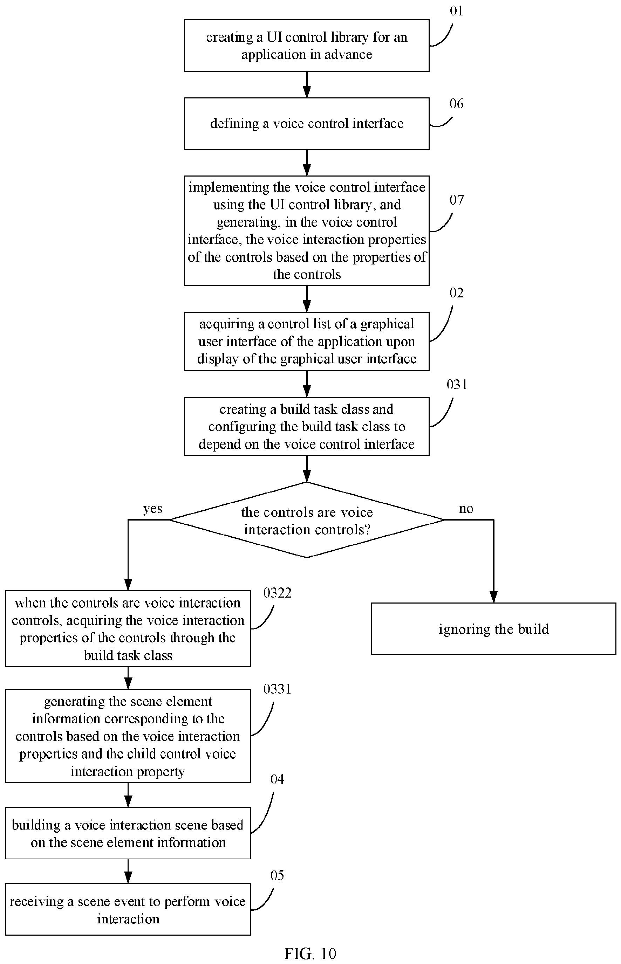

Preferably, referring to FIG. 10, the step 032 further includes:
step 0322, when the controls are voice interaction controls, acquiring the voice interaction properties of the controls through the build task class.

The step 0322 can be implemented by the first generation module 130. In other words, the first generation module 130 is configured to, when the controls are voice interaction controls, acquire the voice interaction properties of the controls through the build task class.

The processor is configured to, when the controls are voice interaction controls, acquire the voice interaction properties of the controls through the build task class.

Specifically, after the control list for the GUI page is obtained, all the controls are traversed to determine whether the controls are voice interaction controls VuiViews. A VuiView includes a control supporting voice interaction. Not all the controls on the GUI page can perform voice interaction. If a control is required to perform voice interaction, the control is expanded into a voice interaction control during the generation of the voice interaction properties. For example, a View is extended to VuiView in VuiCommon, while a View that is not extended is not VuiView. Whether a current control is VuiView may be determined by querying whether the current control is extended. When a control is not a voice interaction control, building of the voice interaction scene may be stopped and the voice interaction stopped.

Similarly, when a control contains a child control, it may be determined whether the child control is a voice interaction control. When the child control is a voice interaction control, the voice interaction properties of the child control are obtained through the build task class. When the child control is not a voice interaction control, this child control can be ignored.

In an example, referring to FIG. 3 again, which shows the GUI for "SOUND". The text control ""volume adjustment" is a prompt information control, not a voice interaction control. The multi-select button control for the "low", "moderate", and "high" options in the "security prompt volume" is a voice interaction control. For example, a user may operate the control to be set to "moderate" with a voice command of "set the security prompt volume to moderate".

In this way, building of voice interaction scene for controls that are not needed for voice interaction is avoided, invalid building is effectively avoided, and building efficiency is improved.

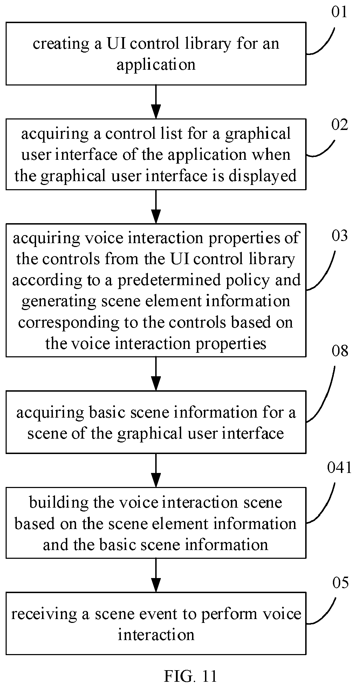

Preferably, referring to FIG. 11, the method of voice interaction further includes:
step 08, acquiring basic scene information for a scene of the graphical user interface.

The step 04 further includes:
step 041, building the voice interaction scene based on the scene element information and the basic scene information.

The step 08 can be implemented by the acquisition module 120. The step 041 can be performed by the building module 140. In other words, the acquisition module 120 is configured to acquire basic scene information for a scene of the graphical user interface. The building module 140 is configured to build the voice interaction scene based on the scene element information and the basic scene information.

The processor is configured to acquire basic scene information for a scene of the graphical user interface; and build the voice interaction scene based on the scene element information and the basic scene information.

Specifically, the basic scene information for the scene of the graphical user interface is acquired. The basic scene information includes scene information such as the ID, Vui version number, and timestamp of the scene.

An example of the basic scene information is given below:
"packageName":"com.xiaopeng.car.settings", "sceneId":"com.xiaopeng.car.settings-VV1.4.0_202 10412194710_Release-Wifi", "timestamp": 1623830168550, "vuiVersion":"2.0".

Further, the voice interaction scene is generated from the basic scene information and the scene element information corresponding to all controls and their child controls.

After building of the voice interaction scene is completed, the relevant information of the scene can be cached locally, or uploaded to a cloud server to generate a scene snapshot. When a user outputs a voice command, a corresponding control in a corresponding graphical user interface can respond to the voice command.

In some embodiments, when a property of a control (such as the name of the control) in a graphical user interface changes, the present invention can automatically build the changed graphical user interface as a voice interaction scene when the page is initialized. For example, referring to FIG. 10, in a new version, a control "system prompt voice" in a page needs to be changed to "prompt voice". It simply needs to set the label of the control VuiLabel to "prompt voice" during the generation of the voice interaction property, without considering update of the voice label for voice interaction in application development as in the prior art. When the page is initialized and entered again, the voice interaction scene is automatically rebuilt for this page.

It should be noted that the application in the above-described embodiments is an example of a program carrier in which the GUI is located. The method of voice interaction of the present application may convert a GUI page of an application into a voice interaction scene. the application may also include an applet application. Controls of the applet application may be added with properties in the UI control library created in advance. When entering a GUI page of the applet from an application, a voice interaction scene can be built for the GUI page and its controls of the applet. Applets and other types of programs having GUIs can be viewed as simple alternatives of applications described herein.

In this way, in the present invention, a UI control library for an application is created in advance. When a graphical user interface of the application is displayed, a control list of the graphical user interface is acquired. Voice interaction properties of the controls are acquired from the UI control library according to a predetermined policy, and scene element information corresponding to the controls is generated from the voice interaction properties. A voice interaction scene is built based on the scene element information. A scene event is received to perform voice interaction, and the scene event is generated from a voice request and the voice interaction scene. With the invention, the graphical user interface can be automatically transformed into a voice interaction scene, which achieves building automation of the voice interaction scene and thus enables voice interaction between vehicles and users. Compared to conventional voice labeling approaches that require considerable labor costs, the present invention enables service of an application to automatically obtain voice interaction properties, generate scene element information, and form a voice interaction scene. Therefore, the labor costs are saved to some extent, and the potential for human errors is reduced. Moreover, in case of a change in the application, a new voice interaction scene can be automatically generated simply by changing the settings of the properties, effectively reducing maintenance costs.

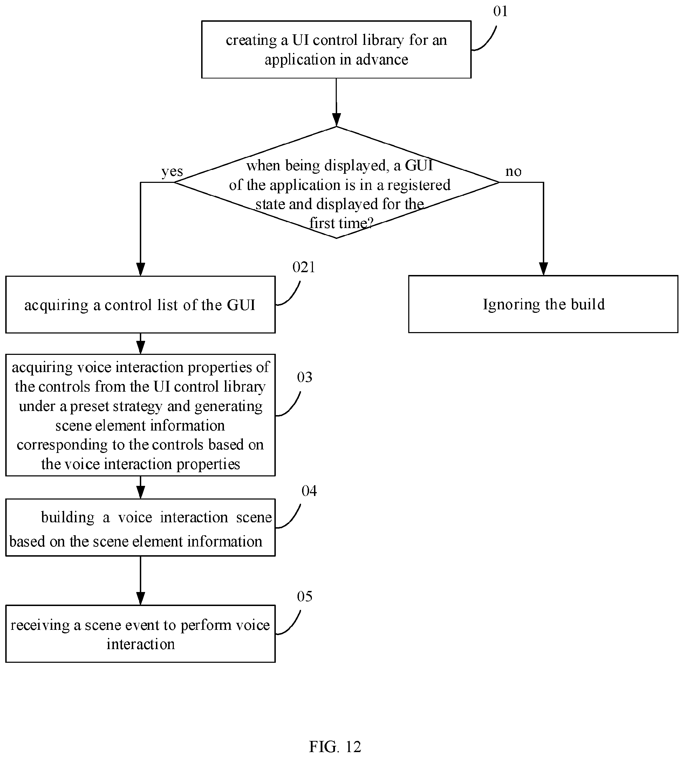

With reference to FIG. 12, the step 02 includes:
step 021, acquiring the control list for the graphical user interface when the displayed graphical user interface is in a registered state and is displayed for the first time.

The step 021 can be implemented by the acquisition module 120. In other words, the acquisition module 120 is configured to acquire the control list for the graphical user interface when the displayed graphical user interface is in a registered state and is displayed for the first time.

The processor is configured to acquire the control list for the graphical user interface when the displayed graphical user interface is in a registered state and is displayed for the first time.

Specifically, corresponding to the life cycle of an Android page, the present application can further add life cycle management for the voice interaction scene, including the states of the scene. At initialization of the GUI page of an application, such as installation, update, or re-installation of the application, the basic scene information of the scene needs to be registered. At this time, the state of the scene is init, i.e., state = init. When the GUI page is displayed or is visible when the application is in the foreground, state = active. When the GUI page exits or is not visible when in the background, state = deactive.

Before said building, when a displayed graphical user interface is registered and the GUI page is displayed or visible for the first time after the registration, the present invention determines that the graphical user interface needs to be built through a preset determination logic. In the event that the graphical user interface needs to be built, the present invention obtains the control list for the graphical user interface.

In an example, the state of the scene can be determined. If the state of the scene before being displayed is init, i.e., state = init, the state of the scene will be active when it becomes visible, i.e., state = active. The state switches from init to active, and it is determined that the scene needs to be built.

In another example, if the state of the scene before being displayed is active, i.e., state = active, the state of the scene will be active when displayed, i.e., state = active. The state is switched from active to active. At this time, since the scene has already been built, there is no need to build the scene again, so it is determined that the current GUI page is not to be built.

In another example, if the scene state is deactive before being displayed, i.e., state = deactive, indicating that the GUI page is in the background, the state of the scene will be active when displayed, i.e., state = active. The state is switched from deactive to active, indicating that the scene has been registered at that time and cannot be built, so it is determined that the current GUI page is not to be built.

In this way, when it is determined that a graphical user interface needs to be built, a list of controls in the graphical user interface is obtained. This makes it possible to effectively avoid repeated or ineffective building, effectively improving the efficiency of building automation.

The present application further provides a system for voice interaction comprising a vehicle and a server. The vehicle comprises a UI control library created for an application in advance.

The vehicle is configured to acquire a control list for a graphical user interface of the application when the graphical user interface is displayed, the control list comprising a plurality of controls; acquire voice interaction properties of the controls from the UI control library according to a predetermined policy and generate scene element information corresponding to the controls based on the voice interaction properties, wherein the voice interaction properties are generated through the UI control library based on properties of the controls; build a voice interaction scene based on the scene element information. the vehicle uploads the built voice interaction scene to the server, and the server generates a snapshot for the voice interaction scene.

Further, in case of a voice request from a user, the voice request is received and is uploaded to the server. The server queries a scene snapshot in response to the voice request, generates a scene event when a matching scene snapshot is found, and sends the scene snapshot to the vehicle.

Upon receiving the scene event, the vehicle performs logical processing according to the scene event to perform an operation for responding to the voice request.

In an example, the user issues a voice command "adjust the volume to 15". A built voice interaction scene "volume" may be found according to analysis of the voice command. A volume page is then entered and an adjustment action is performed to adjust a property of the control to 15.

An embodiment of the present application further provides a computer-readable storage medium. The embodiment provides one or more non-transitory computer-readable storage media storing a computer program that, when executed by one or more processors, carries out the automated building method of any of the above embodiments. It will be appreciated by one of ordinary skills in the art that all or part of the processes in the method embodiments described above may be accomplished by instructing relevant software through a computer program. The program may be stored in a non-transitory computer-readable storage medium. The program, when executed, may include a flow of an embodiment of the methods as described above. The storage medium may be a magnetic disk, an optical disk, a read-only memory (ROM), or the like.

In this way, in the present invention, a UI control library for an application is created in advance. When a graphical user interface of the application is displayed, a control list of the graphical user interface is acquired. Voice interaction properties of the controls are acquired from the UI control library according to a predetermined policy, and scene element information corresponding to the controls is generated from the voice interaction properties. A voice interaction scene is built based on the scene element information. A scene event is received to perform voice interaction, the scene event generated from a voice request and the voice interaction scene. At least following advantages are achieved.

First, with the invention, the graphical user interface can be automatically transformed into a voice interaction scene, which achieves building automation of the voice interaction scene and thus enables voice interaction between vehicles and users. Compared to conventional voice labeling approaches that require considerable labor costs, the present invention enables service of an application to automatically obtain voice interaction properties, generate scene element information, and form a voice interaction scene.

Second, the labor costs are saved to some extent, and the potential for human errors is reduced.

Third, in case of a change in the application, a new voice interaction scene can be automatically generated simply by changing the settings of the properties, effectively reducing maintenance costs.

Fourth, with the determination of a parent control of a control, the graphical user interface is provided with a parent-child relation in a 3D space to a certain extent, such that a built voice interaction scene has three-dimensional spatial information for voice manipulation. When a voice command specifies the control, the user's desired operation can be effectively selected, thereby improving user experience.

Fifth, the Android original properties are extended to include the VUI properties by defining the voice control interface and having the UI control library depend on VuiCommon. Moreover, an association is established between the UI control library and the VuiEngine SDK by extending the voice control interface. This can, to some extent, avoid redundancy in application packages due to the VuiEngine SDK depending on the UI control library and reduce the coupling.

In the description herein, specific features, structures, materials, or characteristics described in connection with terms such as "an embodiment," "some embodiments," "an illustrative embodiment," "an example," "a specific example," or "some examples," etc. are intended to be comprised in at least one embodiment or example of the present application. In this specification, reference to the above terms do not necessarily refer to the same embodiment or example. Furthermore, the specific features, structures, materials, or characteristics described may be combined in any suitable manner in any one or more embodiments or examples. In addition, a skilled person can appreciate that the various embodiments, examples, and features of the embodiments and examples described herein may be combined with each other, except to the extent that they might be mutually exclusive. Further, references to terms "first", "second" and the like are intended to distinguish same or similar operations. Features following terms such as "first" and "second" may, have a logical relationship between each other; while in other embodiments they do not necessarily have a logical or sequential relation. The relations between such features should be determined depending on actual embodiments, and should not be determined merely literally.

Any process or method operations in the flowcharts or otherwise described herein may be understood as representing modules, segments, or portions of codes which include one or more executable instructions for implementing specific logical functions or steps of the processes. Moreover, it will be appreciated by those skilled in the art that the scope of the preferred embodiments of the present application includes additional embodiments, in which functions may be performed out of order from that illustrated or discussed herein, but may instead be performed in substantially the same way or in reverse order depending on the functionality involved.

While embodiments of the present application have been illustrated and described above, it will be appreciated that the embodiments described above are illustrative and are not to be construed as limiting the present application. Variations, modifications, substitutions, and alterations of the embodiments described above may be made by one of ordinary skills in the art without departing from the scope of the present application.

## Claims

1. A method for voice interaction comprising the steps of:
creating (01) a UI control library for an application in advance, wherein the UI control library is an Android UI component library;
defining (06) a voice control interface in a voice user interface, VUI, package, wherein the UI control library is dependent on the VUI package;
implementing (07) the voice control interface using the UI control library dependent on the VUI package;
acquiring (02), from the UI control library, a control list for a graphical user interface of the application when the graphical user interface is displayed, the control list comprising a plurality of controls;
acquiring (03) voice interaction properties of the controls from the UI control library according to a predetermined policy and generating scene element information corresponding to the controls based on the voice interaction properties, wherein the voice interaction properties are generated through and added to the UI control library based on properties of the controls;
building (04) a voice interaction scene based on the scene element information; and
receiving (05) a scene event to perform voice interaction, the scene event generated based on a voice request and the voice interaction scene;
wherein the voice control interface is implemented using the UI control library based on the properties of the controls to generate the voice interaction properties of the controls, and
wherein said acquiring voice interaction properties of the controls from the UI control library according to a predetermined policy and generating scene element information corresponding to the controls based on the voice interaction properties comprises:
creating (031) a task class and configuring the task class to depend on the voice control interface;
acquiring (032) the voice interaction properties of the controls from the voice control interface through the task class; and
generating (033) the scene element information corresponding to the controls based on the voice interaction properties.

2. The method of claim 1, wherein said acquiring a control list for a graphical user interface of the application comprises:
acquiring the control list for the graphical user interface only when the displayed graphical user interface is in a registered state and is displayed for the first time.

3. The method of claim 1, wherein:
the properties comprise control properties of the controls and parent control properties of parent controls of the controls; and
said implementing the voice control interface using the UI control library based on the properties of the controls to generate the voice interaction properties of the controls comprises:
implementing (071) the voice control interface using the UI control library based on the control properties and the parent control properties to generate the voice interaction properties of the controls.

4. The method of claim 3, wherein the voice interaction properties comprise:
control unique identifiers, control types, control labels, control supported actions, parent control identifiers, and/or parent control labels.

5. The method of claim 3 or 4, wherein said implementing the voice control interface using the UI control library based on the properties of the controls to generate the voice interaction properties of the controls further comprises:
when the controls or the parent controls contain text, generating (0711) the control labels for the controls or the parent control labels for the parent controls based on the text; and
when the controls or the parent controls are graphics, generating (0712) corresponding semantic text based on the graphics to determine the control labels for the controls or the parent control labels for the parent controls.

6. The method of claim 1, wherein:
said acquiring the voice interaction properties of the controls from the voice control interface through the task class further comprises:
when the controls contain a child control, acquiring (0321) a child control voice interaction property of the child control from the voice control interface through the task class; and
said generating the scene element information corresponding to the controls based on the voice interaction properties comprises:
generating (0331) the scene element information corresponding to the controls based on the voice interaction properties and the child control voice interaction property.

7. The method of claim 1, wherein said acquiring the voice interaction properties of the controls from the voice control interface through the task class comprises:
when the controls are voice interaction controls, acquiring (0322) the voice interaction properties of the controls through the task class.

8. The method of claim 1, further comprising:
acquiring (08) basic scene information for a scene of the graphical user interface,
wherein said building a voice interaction scene based on the scene element information further comprises:
building (041) the voice interaction scene based on the scene element information and the basic scene information.

9. An apparatus (100) for voice interaction comprising:
a creation module (110) configured to create a UI control library for an application in advance, wherein the UI control library is an Android UI component library;
a second generation module (160) configured to define a voice control interface in a voice user interface, VUI, package, wherein the UI control library is dependent on the VUI package, and implement the voice control interface using the UI control library dependent on the VUI package and generate, in the voice control interface, the voice interaction properties of the controls based on the properties of the controls;
an acquisition module (120) configured to acquire, from the UI control library, a control list for a graphical user interface of the application when the graphical user interface is displayed, the control list comprising a plurality of controls;
a first generation module (130) configured to acquire voice interaction properties of the controls from the UI control library according to a predetermined policy and generate scene element information corresponding to the controls based on the voice interaction properties, wherein the voice interaction properties are generated through and added to the UI control library based on properties of the controls;
a building module (140) configured to build a voice interaction scene based on the scene element information; and
a receiving module (150) configured to receive a scene event to perform voice interaction, the scene event generated based on a voice request and the voice interaction scene;
wherein the first generation module is further configured to create a task class and configure the task class to depend on the voice control interface, acquire the voice interaction properties of the controls from the voice control interface through the task class, and generate the scene element information corresponding to the controls based on the voice interaction properties.

10. A system for voice interaction comprising a vehicle and a server, the vehicle comprising a UI control library created for an application in advance, wherein the UI control library is an Android UI component library, wherein:
the vehicle is configured to:
define (06) a voice control interface in a voice user interface, VUI, package, wherein the UI control library is dependent on the VUI package;
implement (07) the voice control interface using the UI control library dependent on the VUI package;
acquire (02), from the UI control library, a control list for a graphical user interface of the application when the graphical user interface is displayed, the control list comprising a plurality of controls,
acquire (03) voice interaction properties of the controls from the UI control library according to a predetermined policy and generate scene element information corresponding to the controls based on the voice interaction properties, wherein the voice interaction properties are generated through and added to the UI control library based on properties of the controls,
build (04) a voice interaction scene based on the scene element information, and
receive (05) a voice request and transmit the voice request to the server;
the server is configured to generate a scene event based on the voice request and send the scene event to the vehicle; and
the vehicle is further configured to receive the scene event to perform voice interaction, the scene event generated based on the voice request and the voice interaction scene;
wherein the voice control interface is implemented using the UI control library based on the properties of the controls to generate the voice interaction properties of the controls; and
wherein said acquiring voice interaction properties of the controls from the UI control library according to a predetermined policy and generating scene element information corresponding to the controls based on the voice interaction properties comprises:
creating (031) a task class and configuring the task class to depend on the voice control interface;
acquiring (032) the voice interaction properties of the controls from the voice control interface through the task class; and
generating (033) the scene element information corresponding to the controls based on the voice interaction properties.

11. A non-transitory computer-readable storage medium having stored thereupon a computer program which, when executed by one or more processors, is configured to perform the steps of the method for voice interaction in accordance with any one of claims 1 to 8.

## Patentansprüche

1. Verfahren zur Sprachinteraktion, das die folgenden Schritte Folgendes beinhaltet:
Erstellen (01) einer UI-Bedienelementebibliothek für eine Anwendung im Voraus, wobei die UI-Bedienelementebibliothek eine Android-UI-Komponentenbibliothek ist;
Definieren (06) einer Sprachsteuerungsschnittstelle in einem VUI-(Voice User Interface)-Paket, wobei die UI-Bedienelementebibliothek von dem VUI-Paket abhängig ist;
Implementieren (07) der Sprachsteuerungsschnittstelle unter Verwendung der von dem VUI-Paket abhängigen UI-Bedienelementebibliothek;
Erfassen (02), aus der UI-Bedienelementebibliothek, einer Bedienelementeliste für eine grafische Benutzeroberfläche der Anwendung, wenn die grafische Benutzeroberfläche angezeigt wird, wobei die Bedienelementeliste mehrere Bedienelemente umfasst;
Erfassen (03) von Sprachinteraktionseigenschaften der Bedienelemente aus der UI-Bedienelementebibliothek gemäß einer vorbestimmten Richtlinie und Erzeugen von Szenenelementinformationen entsprechend den Bedienelementen auf der Basis der Sprachinteraktionseigenschaften, wobei die Sprachinteraktionseigenschaften durch die UI-Bedienelementebibliothek auf der Basis von Eigenschaften der Bedienelemente erzeugt und zu dieser hinzugefügt werden;
Aufbauen (04) einer Sprachinteraktionsszene auf der Basis der Szenenelementinformationen; und
Empfangen (05) eines Szenenereignisses zum Durchführen von Sprachinteraktion, wobei das Szenenereignis auf der Basis einer Sprachanforderung und der Sprachinteraktionsszene erzeugt wird;
wobei die Sprachsteuerungsschnittstelle unter Verwendung der UI-Bedienelementebibliothek auf der Basis der Eigenschaften der Bedienelemente implementiert wird, um die Sprachinteraktionseigenschaften der Bedienelemente zu erzeugen, und
wobei das genannte Erfassen von Sprachinteraktionseigenschaften der Bedienelemente aus der UI-Bedienelementebibliothek gemäß einer vorbestimmten Richtlinie und das Erzeugen von Szenenelementinformationen entsprechend den Bedienelementen auf der Basis der Sprachinteraktionseigenschaften Folgendes beinhaltet:
Erstellen (031) einer Aufgabenklasse und Konfigurieren der Aufgabenklasse so, dass sie von der Sprachsteuerungsschnittstelle abhängt;
Erfassen (032) der Sprachinteraktionseigenschaften der Bedienelemente von der Sprachsteuerungsschnittstelle durch die Aufgabenklasse; und
Erzeugen (033) der Szenenelementinformationen entsprechend den Bedienelementen auf der Basis der Sprachinteraktionseigenschaften.

2. Verfahren nach Anspruch 1, wobei das genannte Erfassen einer Bedienelementeliste für eine graphische Benutzeroberfläche der Anwendung Folgendes beinhaltet:
Erfassen der Bedienelementeliste für die grafische Benutzeroberfläche nur dann, wenn die angezeigte grafische Benutzeroberfläche in einem registrierten Zustand ist und zum ersten Mal angezeigt wird.

3. Verfahren nach Anspruch 1, wobei:
die Eigenschaften Steuereigenschaften der Bedienelemente und übergeordnete Steuereigenschaften von übergeordneten Bedienelementen der Bedienelemente umfassen; und
das genannte Implementieren der Sprachsteuerungsschnittstelle unter Verwendung der UI-Bedienelementebibliothek auf der Basis der Eigenschaften der Bedienelemente zum Erzeugen der Sprachinteraktionseigenschaften der Bedienelemente Folgendes beinhaltet:
Implementieren (071) der Sprachsteuerungsschnittstelle unter Verwendung der UI-Bedienelementebibliothek auf der Basis der Steuereigenschaften und der übergeordneten Steuereigenschaften, um die Sprachinteraktionseigenschaften der Bedienelemente zu erzeugen.

4. Verfahren nach Anspruch 3, wobei die Sprachinteraktionseigenschaften Folgendes umfassen:
eindeutige Bedienelementkennungen, Bedienelementtypen, Bedienelementetiketten, unterstützte Steueraktionen, übergeordnete Bedienelementkennungen und/oder übergeordnete Bedienelementetiketten.

5. Verfahren nach Anspruch 3 oder 4, wobei das genannte Implementieren der Sprachsteuerungsschnittstelle unter Verwendung der UI-Bedienelementebibliothek auf der Basis der Eigenschaften der Bedienelemente zum Erzeugen der Sprachinteraktionseigenschaften der Bedienelemente ferner Folgendes beinhaltet:
Erzeugen (0711), wenn die Bedienelemente oder die übergeordneten Bedienelemente Text enthalten, der Bedienelementetiketten für die Bedienelemente oder der übergeordneten Bedienelementetiketten für die übergeordneten Bedienelemente auf der Basis des Texts; und
Erzeugen (0712), wenn die Bedienelemente oder die übergeordneten Bedienelemente Grafiken sind, von entsprechendem semantischem Text auf der Basis der Grafiken, um die Bedienelementetiketten für die Bedienelemente oder die übergeordneten Bedienelementetiketten für die übergeordneten Bedienelemente zu bestimmen.

6. Verfahren nach Anspruch 1, wobei:
das genannte Erfassen der Sprachinteraktionseigenschaften der Bedienelemente von der Sprachsteuerungsschnittstelle durch die Aufgabenklasse ferner Folgendes beinhaltet:
Erfassen (0321), wenn die Bedienelemente ein untergeordnetes Bedienelement enthalten, einer Untergeordnetes-Bedienelement-Sprachinteraktionseigenschaft des untergeordneten Bedienelements von der Sprachsteuerungsschnittstelle durch die Aufgabenklasse; und
das genannte Erzeugen der Szenenelementinformationen entsprechend den Bedienelementen auf der Basis der Sprachinteraktionseigenschaften Folgendes beinhaltet:
Erzeugen (0331) der Szenenelementinformationen entsprechend den Bedienelementen auf der Basis der Sprachinteraktionseigenschaften und der Untergeordnetes-Bedienelement-Sprachinteraktionseigenschaft.

7. Verfahren nach Anspruch 1, wobei das genannte Erfassen der Sprachinteraktionseigenschaften der Bedienelemente von der Sprachsteuerungsschnittstelle durch die Aufgabenklasse Folgendes beinhaltet:
Erfassen (0322), wenn die Bedienelemente Sprachinteraktionsbedienelemente sind, der Sprachinteraktionseigenschaften der Bedienelemente durch die Aufgabenklasse.

8. Verfahren nach Anspruch 1, das ferner Folgendes beinhaltet:
Erfassen (08) von Basisszeneninformationen für eine Szene der grafischen B enutzerob erfläche,
wobei das genannte Aufbauen einer Sprachinteraktionsszene auf der Basis der Szenenelementinformationen ferner Folgendes beinhaltet:
Aufbauen (041) der Sprachinteraktionsszene auf der Basis der Szenenelementinformationen und der Basisszeneninformation.

9. Vorrichtung (100) für Sprachinteraktion, die Folgendes umfasst:
ein Erstellungsmodul (110), konfiguriert zum Erstellen einer UI-Bedienelementebibliothek für eine Anwendung im Voraus, wobei die UI-Bedienelementebibliothek eine Android-UI-Komponentenbibliothek ist;
ein zweites Erzeugungsmodul (160), konfiguriert zum Definieren einer Sprachsteuerungsschnittstelle in einem VUI-(Voice User Interface)-Paket, wobei die UI-Bedienelementebibliothek von dem VUI-Paket abhängig ist, und Implementieren der Sprachsteuerungsschnittstelle unter Verwendung der von dem VUI-Paket abhängigen UI-Bedienelementebibliothek, und Erzeugen, in der Sprachsteuerungsschnittstelle, der Sprachinteraktionseigenschaften der Bedienelemente auf der Basis der Eigenschaften der Bedienelemente;
ein Erfassungsmodul (120), konfiguriert zum Erfassen, aus der UI-Bedienelementebibliothek, einer Bedienelementeliste für eine grafische Benutzeroberfläche der Anwendung, wenn die grafische Benutzeroberfläche angezeigt wird, wobei die Bedienelementeliste mehrere Bedienelemente umfasst;
ein erstes Erzeugungsmodul (130), konfiguriert zum Erfassen von Sprachinteraktionseigenschaften der Bedienelemente aus der UI-Bedienelementebibliothek gemäß einer vorbestimmten Richtlinie und Erzeugen von Szenenelementinformationen entsprechend den Bedienelementen auf der Basis der Sprachinteraktionseigenschaften, wobei die Sprachinteraktionseigenschaften durch die UI-Bedienelementebibliothek auf der Basis von Eigenschaften der Bedienelemente erzeugt und zu dieser hinzugefügt werden;
ein Aufbaumodul (140), konfiguriert zum Aufbauen einer Sprachinteraktionsszene auf der Basis der Szenenelementinformationen; und
ein Empfangsmodul (150), konfiguriert zum Empfangen eines Szenenereignisses zum Durchführen von Sprachinteraktion, wobei das Szenenereignis auf der Basis einer Sprachanforderung und der Sprachinteraktionsszene erzeugt wird;
wobei das erste Erzeugungsmodul ferner konfiguriert ist zum Erzeugen einer Aufgabenklasse und Konfigurieren der Aufgabenklasse, so dass sie von der Sprachsteuerungsschnittstelle abhängt, Erfassen der Sprachinteraktionseigenschaften der Bedienelemente von der Sprachsteuerungsschnittstelle über die Aufgabenklasse und Erzeugen der Szenenelementinformationen entsprechend den Bedienelementen auf der Basis der Sprachinteraktionseigenschaften.

10. System für Sprachinteraktion, das ein Fahrzeug und einen Server umfasst, wobei das Fahrzeug eine für eine Anwendung im Voraus erstellte UI-Bedienelementebibliothek umfasst, wobei die UI-Bedienelementebibliothek eine Android-UI-Komponentenbibliothek ist, wobei:
das Fahrzeug konfiguriert ist zum:
Definieren (06) einer Sprachsteuerungsschnittstelle in einem VUI-(Voice User Interface)-Paket, wobei die UI-Bedienelementebibliothek von dem VUI-Paket abhängig ist;
Implementieren (07) der Sprachsteuerungsschnittstelle unter Verwendung der von dem VUI-Paket abhängigen UI-Bedienelementebibliothek;
Erfassen (02), aus der UI-Bedienelementebibliothek, einer Bedienelementeliste für eine grafische Benutzeroberfläche der Anwendung, wenn die grafische Benutzeroberfläche angezeigt wird, wobei die Bedienelementeliste mehrere Bedienelemente umfasst;
Erfassen (03) von Sprachinteraktionseigenschaften der Bedienelemente aus der UI-Bedienelementebibliothek gemäß einer vorbestimmten Richtlinie und Erzeugen von Szenenelementinformationen entsprechend den Bedienelementen auf der Basis der Sprachinteraktionseigenschaften, wobei die Sprachinteraktionseigenschaften durch die UI-Bedienelementebibliothek auf der Basis von Eigenschaften der Bedienelemente erzeugt und zu dieser hinzugefügt werden;
Aufbauen (04) einer Sprachinteraktionsszene auf der Basis der Szenenelementinformationen; und
Empfangen (05) einer Sprachanforderung und Übertragen der Sprachanforderung zum Server;
der Server zum Erzeugen eines Szenenereignisses auf der Basis der Sprachanforderung und Senden des Szenenereignisses zu dem Fahrzeug konfiguriert ist; und
das Fahrzeug ferner zum Empfangen des Szenenereignisses zum Durchführen von Sprachinteraktion konfiguriert ist, wobei das Szenenereignis auf der Basis der Sprachanforderung und der Sprachinteraktionsszene erzeugt wird;
wobei die Sprachsteuerungsschnittstelle unter Verwendung der UI-Bedienelementebibliothek auf der Basis der Eigenschaften der Bedienelemente implementiert wird, um die Sprachinteraktionseigenschaften der Bedienelemente zu erzeugen, und
wobei das genannte Erfassen von Sprachinteraktionseigenschaften der Bedienelemente aus der UI-Bedienelementebibliothek gemäß einer vorbestimmten Richtlinie und das Erzeugen von Szenenelementinformationen entsprechend den Bedienelementen auf der Basis der Sprachinteraktionseigenschaften Folgendes beinhalten:
Erstellen (031) einer Aufgabenklasse und Konfigurieren der Aufgabenklasse so, dass sie von der Sprachsteuerungsschnittstelle abhängt;
Erfassen (032) der Sprachinteraktionseigenschaften der Bedienelemente von der Sprachsteuerungsschnittstelle durch die Aufgabenklasse; und
Erzeugen (033) der Szenenelementinformationen entsprechend den Bedienelementen auf der Basis der Sprachinteraktionseigenschaften.

11. Nichtflüchtiges computerlesbares Speichermedium, auf dem ein Computerprogramm gespeichert ist, das bei Ausführung durch einen oder mehrere Prozessoren zum Durchführen der Schritte des Verfahrens zur Sprachinteraktion gemäß einem der Ansprüche 1 bis 8 konfiguriert ist.

## Revendications

1. Un procédé d'interaction vocale comprenant les opérations suivantes :
la création (01) anticipée d'une bibliothèque de commandes d'UI destinée à une application, où la bibliothèque de commandes d'UI est une bibliothèque de composants d'UI Android,
la définition (06) d'une interface de commande vocale dans un ensemble d'interface utilisateur vocale, VUI, où la bibliothèque de commandes d'UI dépend de l'ensemble VUI,
la mise en oeuvre (07) de l'interface de commande vocale au moyen de la bibliothèque de commandes d'UI qui dépend de l'ensemble VUI,
l'acquisition (02), à partir de la bibliothèque de commandes d'UI, d'une liste de commandes destinée à une interface utilisateur graphique de l'application lorsque l'interface utilisateur graphique est affichée, la liste de commandes comprenant une pluralité de commandes,
l'acquisition (03) de propriétés d'interaction vocale des commandes à partir de la bibliothèque de commandes d'UI en fonction d'une politique prédéterminée et la génération d'informations d'éléments de scène correspondant aux commandes en fonction des propriétés d'interaction vocale, où les propriétés d'interaction vocale sont générées par l'intermédiaire de et ajoutées à la bibliothèque de commandes d'UI en fonction des propriétés des commandes,
la construction (04) d'une scène d'interaction vocale en fonction des informations d'éléments de scène, et
la réception (05) d'un événement de scène destiné à l'exécution d'une interaction vocale, l'événement de scène étant généré en fonction d'une demande vocale et de la scène d'interaction vocale,
où l'interface de commande vocale est mise en oeuvre au moyen de la bibliothèque de commandes d'UI en fonction des propriétés des commandes de façon à générer les propriétés d'interaction vocale des commandes, et
où ladite acquisition de propriétés d'interaction vocale des commandes à partir de la bibliothèque de commandes d'UI en fonction d'une politique prédéterminée et la génération d'informations d'éléments de scène correspondant aux commandes en fonction des propriétés d'interaction vocale comprend :
la création (031) d'une classe de tâches et la configuration de la classe de tâches de façon qu'elle dépende de l'interface de commande vocale,
l'acquisition (032) des propriétés d'interaction vocale des commandes à partir de l'interface de commande vocale par l'intermédiaire de la classe de tâches, et
la génération (033) des informations d'éléments de scène correspondant aux commandes en fonction des propriétés d'interaction vocale.

2. Le procédé selon la Revendication 1, où ladite acquisition d'une liste de commandes pour une interface utilisateur graphique de l'application comprend :
l'acquisition de la liste de commandes pour l'interface utilisateur graphique uniquement lorsque l'interface utilisateur graphique affichée est dans un état enregistré et est affichée pour la première fois.

3. Le procédé selon la Revendication 1, où :
les propriétés comprennent des propriétés de commande des commandes et des propriétés de commande parents de commandes parents des commandes, et
ladite mise en oeuvre de l'interface de commande vocale au moyen de la bibliothèque de commandes d'UI en fonction des propriétés des commandes de façon à générer les propriétés d'interaction vocale des commandes comprend :
la mise en oeuvre (071) de l'interface de commande vocale au moyen de la bibliothèque de commandes d'UI en fonction des propriétés de commande et des propriétés de commande parents de façon à générer les propriétés d'interaction vocale des commandes.

4. Le procédé selon la Revendication 3, où les propriétés d'interaction vocale comprennent :
des identifiants uniques de commande, des types de commande, des étiquettes de commande, des actions prises en charge par des commandes, des identifiants de commande parents et/ou des étiquettes de commande parents.

5. Le procédé selon la Revendication 3 ou 4, où ladite mise en oeuvre de l'interface de commande vocale au moyen de la bibliothèque de commandes d'UI en fonction des propriétés des commandes de façon à générer les propriétés d'interaction vocale des commandes comprend en outre :
lorsque les commandes ou les commandes parents contiennent du texte, la génération (0711) des étiquettes de commande pour les commandes ou des étiquettes de commande parents pour les commandes parents en fonction du texte, et
lorsque les commandes ou les commandes parents sont des graphismes, la génération (0712) d'un texte sémantique correspondant en fonction des graphismes de façon à déterminer les étiquettes de commande pour les commandes ou les étiquettes de commande parents pour les commandes parents.

6. Le procédé selon la Revendication 1, où :
ladite acquisition des propriétés d'interaction vocale des commandes à partir de l'interface de commande vocale par l'intermédiaire de la classe de tâches comprend en outre :
lorsque les commandes contiennent une commande enfant, l'acquisition (0321) d'une propriété d'interaction vocale de commande enfant de la commande enfant à partir de l'interface de commande vocale par l'intermédiaire de la classe de tâches, et
ladite génération des informations d'éléments de scène correspondant aux commandes en fonction des propriétés d'interaction vocale comprend :
la génération (0331) des informations d'éléments de scène correspondant aux commandes en fonction des propriétés d'interaction vocale et de la propriété d'interaction vocale de commande enfant.

7. Le procédé selon la Revendication 1, où ladite acquisition des propriétés d'interaction vocale des commandes à partir de l'interface de commande vocale par l'intermédiaire de la classe de tâches comprend :
lorsque les commandes sont des commandes d'interaction vocale, l'acquisition (0322) des propriétés d'interaction vocale des commandes par l'intermédiaire de la classe de tâches.

8. Le procédé selon la Revendication 1, comprenant en outre :
l'acquisition (08) d'informations de scène de base pour une scène de l'interface utilisateur graphique,
où ladite construction d'une scène d'interaction vocale en fonction des informations d'éléments de scène comprend en outre :
la construction (041) de la scène d'interaction vocale en fonction des informations d'éléments de scène et des informations de scène de base.

9. Un appareil (100) d'interaction vocale comprenant :
un module de création (110) configuré de façon à créer de manière anticipée une bibliothèque de commandes d'UI pour une application, où la bibliothèque de commandes d'UI est une bibliothèque de composants d'UI Android,
un deuxième module de génération (160) configuré de façon à définir une interface de commande vocale dans un ensemble d'interface utilisateur vocale, VUI, où la bibliothèque de commandes d'UI dépend de l'ensemble VUI, et à mettre en oeuvre l'interface de commande vocale au moyen de la bibliothèque de commandes d'UI qui dépend de l'ensemble VUI et à générer, dans l'interface de commande vocale, les propriétés d'interaction vocale des commandes en fonction des propriétés des commandes,
un module d'acquisition (120) configuré de façon à acquérir, à partir de la bibliothèque de commandes d'UI, une liste de commandes pour une interface utilisateur graphique de l'application lorsque l'interface utilisateur graphique est affichée, la liste de commandes comprenant une pluralité de commandes,
un premier module de génération (130) configuré de façon à acquérir des propriétés d'interaction vocale des commandes à partir de la bibliothèque de commandes d'UI en fonction d'une politique prédéterminée et à générer des informations d'éléments de scène correspondant aux commandes en fonction des propriétés d'interaction vocale, où les propriétés d'interaction vocale sont générées par l'intermédiaire de et ajoutées à la bibliothèque de commandes d'UI en fonction de propriétés des commandes,
un module de construction (140) configuré de façon à construire une scène d'interaction vocale en fonction des informations d'éléments de scène, et
un module de la réception (150) configuré de façon à recevoir un événement de scène destiné à l'exécution d'une interaction vocale, l'événement de scène étant généré en fonction d'une demande vocale et de la scène d'interaction vocale,
où le premier module de génération est configuré en outre de façon à créer une classe de tâches et à configurer la classe de tâches de façon qu'elle dépende de l'interface de commande vocale, à acquérir les propriétés d'interaction vocale des commandes à partir de l'interface de commande vocale par l'intermédiaire de la classe de tâches et à générer les informations d'éléments de scène correspondant aux commandes en fonction des propriétés d'interaction vocale.

10. Un système d'interaction vocale comprenant un véhicule et un serveur, le véhicule comprenant une bibliothèque de commandes d'UI créée de manière anticipée pour une application, où la bibliothèque de commandes d'UI est une bibliothèque de composants d'UI Android, où :
le véhicule est configuré de façon à :
définir (06) une interface de commande vocale dans un ensemble d'interface utilisateur vocale, VUI, où la bibliothèque de commandes d'UI dépend de l'ensemble VUI,
mettre en oeuvre (07) l'interface de commande vocale au moyen de la bibliothèque de commandes d'UI qui dépend de l'ensemble VUI,
acquérir (02), à partir de la bibliothèque de commandes d'UI, une liste de commandes pour une interface utilisateur graphique de l'application lorsque l'interface utilisateur graphique est affichée, la liste de commandes comprenant une pluralité de commandes,
acquérir (03) des propriétés d'interaction vocale des commandes à partir de la bibliothèque de commandes d'UI en fonction d'une politique prédéterminée et générer des informations d'éléments de scène correspondant aux commandes en fonction des propriétés d'interaction vocale, où les propriétés d'interaction vocale sont générées par l'intermédiaire de et ajoutées à la bibliothèque de commandes d'UI en fonction de propriétés des commandes,
construire (04) une scène d'interaction vocale en fonction des informations d'éléments de scène, et
recevoir (05) une demande vocale et transmettre la demande vocale au serveur,
le serveur est configuré de façon à générer un événement de scène en fonction de la demande vocale et à envoyer l'événement de scène au véhicule, et
le véhicule est configuré en outre de façon à recevoir l'événement de scène destiné à l'exécution d'une interaction vocale, l'événement de scène étant généré en fonction de la demande vocale et de la scène d'interaction vocale,
où l'interface de commande vocale est mise en oeuvre au moyen de la bibliothèque de commandes d'UI en fonction des propriétés des commandes de façon à générer les propriétés d'interaction vocale des commandes, et
où ladite acquisition de propriétés d'interaction vocale des commandes à partir de la bibliothèque de commandes d'UI en fonction d'une politique prédéterminée et la génération d'informations d'éléments de scène correspondant aux commandes en fonction des propriétés d'interaction vocale comprend :
la création (031) d'une classe de tâches et la configuration de la classe de tâches de façon qu'elle dépende de l'interface de commande vocale,
l'acquisition (032) des propriétés d'interaction vocale des commandes à partir de l'interface de commande vocale par l'intermédiaire de la classe de tâches, et
la génération (033) des informations d'éléments de scène correspondant aux commandes en fonction des propriétés d'interaction vocale.

11. Un support à mémoire lisible par ordinateur non transitoire possédant conservé en mémoire sur celui-ci un programme informatique qui, lorsqu'il est exécuté par un ou plusieurs processeurs, est configuré de façon à exécuter les opérations du procédé d'interaction vocale selon l'une quelconque des Revendications 1 à 8.
